# EUROPÄISCHE PATENTSCHRIFT

(11) **EP 3 209 954 B1**
(45) Veröffentlichungstag und Bekanntmachung des Hinweises auf die Patenterteilung: **17.02.2021**
(21) Anmeldenummer: 15787460.3
(22) Anmeldetag: 22.10.2015
(51) Int. Cl.: F25D 3/10

(54) **OPTISCHER TISCH**
OPTICAL TABLE
TABLE OPTIQUE

(30) Priorität: 23.10.2014 DE 102014015665
(43) Veröffentlichungstag der Anmeldung: 30.08.2017
(73) Patentinhaber: Attocube Systems AG, 85540 Haar (DE)
(72) Erfinder: HAFT, Dirk, 85540 Haar (DE); OTTO, Florian, 83026 Rosenheim (DE); DAL SAVIO, Claudio, 85598 Baldham (DE); KARRAI, Khaled, 80469 München (DE)
(74) Vertreter: DTS Patent- und Rechtsanwälte Schnekenbühl und Partner mbB
(86) Internationale Anmeldenummer: PCT/EP2015/002092
(87) Internationale Veröffentlichungsnummer: WO 2016/062404

(56) Entgegenhaltungen:
- JÉRÔME DEGALLAIX ET AL: "The new cryogenic facility at LMA", JOURNAL OF PHYSICS: CONFERENCE SERIES, INSTITUTE OF PHYSICS PUBLISHING, BRISTOL, GB, Bd. 363, Nr. 1, 1. Juni 2012 (2012-06-01), Seite 12008, XP020224660, ISSN: 1742-6596, DOI: 10.1088/1742-6596/363/1/012008
- N.N.: "Optical tops, Breadboards, & Supports", 30 x 72 0 30 x 96 0.75 x 2.4 784 - 492 784 - 692 30 x 120 0, 16. März 2009 (2009-03-16), XP055245730, Gefunden im Internet: URL:http://www.gmp.ch/htmlarea/pdf/Optical .pdf [gefunden am 2016-01-28]
- TMC Vibration Control: "Part 1 - TMC Optical Table Setup Video", Youtube, 8 January 2014 (2014-01-08), page 1 pp., XP054980225, Retrieved from the Internet: URL:https://www.youtube.com/watch?v=GGXKWk Aqjvo [retrieved on 2020-02-17]
- N. N.: "TMC Resource Guide 12", , 31 December 2012 (2012-12-31), pages 1-124, XP55691567, Retrieved from the Internet: URL:https://www.gmp.ch/pdf/catalogues/TMC_ Catalog2012.pdf [retrieved on 2020-05-05]

## Beschreibung

Die Erfindung betrifft einen optischen Tisch mit einer Tischplatte und mindestens einem Tischbein. In einer Tischoberfläche der Tischplatte sind Befestigungsmittel zur Befestigung von Objekten vorgesehen. Das mindestens eine Tischbein ist mit einer Dämpfungseinrichtung zur Dämpfung von Vibrationen ausgestattet.

In vielen hochpräzisen und entsprechend hochempfindlichen optischen Experimenten wie beispielsweise denen der höchstauflösenden und mithin höchst sensiblen Super Resolution Optical Microscopy oder auch der Quantenoptik werden auf optischen Tischen komplexe Messaufbauten aus einer Vielzahl von optischen Komponenten arrangiert. Die Messgenauigkeit wird durch Umgebungseinflüsse wie Vibrationen, thermische Effekte oder elektromagnetisches Rauschen begrenzt. Daher werden viele solcher Experimente unter am Ort einer zu vermessenden Probe möglichst vibrationsarmen und auch kryogenen Bedingungen durchgeführt. Im Stand der Technik werden Kältemaschinen wie Kryostate oberhalb oder auf dem optischen Tisch angeordnet.

Einen optischen Tisch zeigt unter anderem JERÖME DEGALLAIX ET AL, "The new cryogenic facility at LMA", JOURNAL OF PHYSICS: CONFERENCE SERIES, INSTITUTE OF PHYSICS PUBLISHING, BRISTOL, GB, (20120601), vol. 363, no. 1, doi:10.1088/1742-6596/363/1/012008, ISSN 1742-6596, page 12008, XP020224660. Das Dokument "TMC Resource Guide 12", XP55691567, URL:https://www.gmp.ch/pdf/catalogues/ TMC_Catalog2012.pdf offenbart auch einen optischen Tisch.

Die Erfindung stellt sich der Aufgabe, einen optischen Tisch zu schaffen, auf dem in flexibler und einfacher Weise vielfältig ausgestaltete optische Experimente mit höchster Auflösung durchgeführt werden können.

Diese Aufgabe wird gelöst von einem optischen Tisch mit einer Tischplatte und mindestens einem Tischbein, bevorzugt mindestens drei Tischbeinen, der die Merkmale des Anspruchs 1 umfasst. In einer Tischoberfläche der Tischplatte sind Befestigungsmittel zur Befestigung von Objekten vorgesehen. Die Tischbeine sind mit einer Dämpfungseinrichtung zur Dämpfung von Vibrationen ausgestattet. Der optische Tisch verfügt ferner über eine integrierte Kühlung. Dazu ist eine Kältemaschine zur Kühlung einer kryogenen Platte unter der Tischplatte vorgesehen, wobei die kyrogene Platte mit der Kältemaschine in thermischem Kontakt steht und durch diese kühlbar ist. Eine Durchbrechung in der Tischplatte ist oberhalb der Kältemaschine vorgesehen. In dieser Durchbrechung ist die kryogene Platte - insbesondere formschlüssig - angeordnet.

Ein optischer Tisch dient der stabilen und vibrationsarmen mechanischen Halterung von Objekten, aus denen ein optisches System aufgebaut ist. Diese Objekte können etwa optische Elemente wie Spiegel, Linsen, Laserquellen oder Probenhalter sein.

Die Tischplatte zeichnet sich durch große Steifigkeit aus und hat eine ebene Tischoberfläche. Die Tischplatte ist mit einem Unterbau mit integrierter Dämpfungseinrichtung verbunden. Die Befestigungsmittel zur Befestigung der Objekte kann ein insbesondere regelmäßiges Muster von Gewindelöchern zur Aufnahme von Pratzen der Objekte oder von in der Tischplatte integrierten Magneten zur Fixierung von Magnetfüßen der Objekte oder aber Klebstoff sein. Befestigungsmittel können sowohl in der Tischplatte als auch auf der oberen Plattenoberfläche der kryogenen Platte vorgesehen sein.

Der Unterbau kann aus einem, zwei, drei, vier oder mehr Tischbeinen bestehen. Die Tischbeine können höhenverstellbar ausgestaltet sein, um die Tischoberfläche horizontal auszurichten, selbst, wenn der optische Tisch auf einem unebenen Boden steht. Die Tischbeine können eine gemeinsame oder jeweils eine Dämpfungseinrichtung zur Vibrationsdämmung der Tischplatte, auf deren Oberfläche sensible optische Experimente durchgeführt werden sollen, umfassen. Eine Dämpfungseinrichtung ist ein System zur Dämpfung von mechanischen Schwingungen wie Vibrationen, Erschütterungen und Stößen, der meist Bewegungsenergie in Wärmeenergie umzuwandeln kann.
Die erfindungsgemäße Dämpfungseinrichtung kann eine Reibungsbremse und/oder resonante Systeme umfassen. Sie kann beispielsweise eine Matte aus elastischem Material wir Gummi oder aber eine Federeinrichtung, eine hydraulische Federung, eine aktive piezoelektrische Dämpfungsregelungseinheit, welche beispielsweise zeit- und richtungsaufgelöst die auf den Tisch wirkenden Kräfte piezoelektrisch detektiert und mittels einer Regelungseinheit mit ebenfalls durch auf den Tisch wirkende piezoelektrische Aktuatoren erzeugte Gegenkräften kompensiert, der Tischbewegung Kräfte oder eine Druckluftlagerung oder eine Kombination daraus sein.

Der erfindungsgemäße optische Tisch verfügt ferner über eine integrierte Kühlung, die eine Kältemaschine zur Kühlung einer kryogenen Platte unter der Tischplatte umfasst. Die Kältemaschine kann ein Aufbau von Kühlanlagen und einem Pumpstand sein. Die Kühlanlagen bestehen beispielsweise aus Absorptionskälteanlagen, Adsorptionskälteanlagen, Diffusionsabsorptionskältemaschinen, Kompressionskälteanlagen, Dampfstrahlkälteanlage, Joule-Thomson-Effekt, Pulsröhrenkühler, lonengetterpumpen, Peltier-Elementen, magnetische Kühlelementen, Vedunstungskühlern und/oder Kryostaten. Der Pumpstand kann ein Aufbau von bewegten Pumpen wie Turbopumpen und Membranpumpen sowie unbewegten Pumpen wie lonengetterpumpen oder Kryopumpen sein. Vorteilhafterweise sind diese Bestandteile der Kältemaschine vibrationsarm ausgelegt und/oder mechanisch von der Tischplatte entkoppelt.

Vorteilhafterweise wird so die Tischplatte und die kryogene Platte, auf der störungsanfällige Präzisionsmessungen stattfinden sollen, von den durch die Kältemaschine ausgehenden Vibrationen entkoppelt. Die Anordnung der Kältemaschine unterhalb der Tischplatte hat den Vorteil, dass die zu untersuchende Probe, die auf der oberen Plattenoberfläche der kryogenen Platte angeordnet ist, und der dafür notwendige optische und messtechnische Aufbau in der Ebene der Tischoberfläche und von oben flexibel anordenbar ist, weil er keinen Einschränkungen durch das Kältesystem oder dessen Zuleitungen unterliegt.

Die Durchbrechung in der Tischplatte kann zur formschlüssigen und/oder starr verbundenen Aufnahme der kryogenen Platte ausgebildet sein.

Erfindungsgemäß ist ferner eine Versteifungsstruktur zwischen der Kältemaschine und mindestens einem Tischbein vorgesehen, wobei die Versteifungsstruktur unterhalb der Dämpfungseinrichtung mit dem mindestens einen Tischbein starr verbunden ist, so dass die Dämpfungseinrichtung die Tischplatte gegenüber der Kältemaschine und den Bereichen, mit denen die Tischbeine am Boden stehen dämpfen kann. Die Kältemaschine stützt sich auf der Versteifungsstruktur ab und ist mit dieser verbunden, bevorzugt auch hinreichend beschwert, so dass sie durch die Schwerkraft fixiert ist. Die Versteifungsstruktur ist eine Platte oder ein Gerüst mit Haltevorrichtungen, welche die Kältemaschine und mindestens ein Tischbein oder auch sämtliche Tischbeine unterhalb der jeweiligen Dämpfungseinrichtung starr verbindet. Die Versteifungsstruktur ist vorzugsweise aus einem verwindungssteifen Material wie Stahl oder Schiefer gefertigt. So kann die Dämpfungseinrichtung die Tischplatte gegenüber der Kältemaschine und den Bereichen, mit denen die Tischbeine auf Boden stehen, dämpfen. Die Kältemaschine und gegebenfalls die Tischbeine stützen sich auf der Versteifungsstruktur ab und ist mit dieser verbunden. Erfindungsgemäße Ausführungsformen des optischen Tisches umfassen die Merkmale einer oder mehrerer der folgenden Ausgestaltungen.

Gemäß einer erfindungsgemäßen Ausgestaltung schließt eine obere Plattenoberfläche der kryogenen Platte mit der Tischoberfläche der Tischplatte bündig ab, so dass die Tischoberfläche und die obere Plattenoberfläche der kryogenen Platte in einer gemeinsame Arbeitsebene liegen. Dies erleichtert die Justierung von Objekten wie optischer Elemente.

Gemäß einer weiteren erfindungsgemäßen Ausgestaltung kann in der oberen Plattenoberfläche der kryogenen Platte Befestigungsmittel zur Befestigung von Objekten vorgesehen sein. Zur einfacheren Montage der Objekte zu einem optischen Aufbau können diese Befestigungsmittel dieselben wie die Befestigungsmittel in der Tischplatte sein und zusätzlich so angeordnet sein, am gleichen Raster ausrichtbar sind.

Gemäß einer weiteren erfindungsgemäßen Ausgestaltung ist die Kältemaschine mit der Versteifungsstruktur starr oder über eine weitere Dämpfungseinrichtung zu ihrer zusätzlichen mechanischen Entkopplung von Tischplatte verbunden.

Gemäß einer weiteren erfindungsgemäßen Ausgestaltung kann um die - vorzugsweise kreisscheibenförmige kryogene Platte zumindest an der oberen Plattenoberfläche und/oder an einer unteren Plattenoberfläche je mindestens Flansch angeordnet sein. Die Flansche sind beispielsweise ebenfalls kreisförmig und entsprechen vorzugsweise einer Normung z.B. bezüglich Dichtfläche, Dichtmittel und auch Befestigungsöffnungen und der für das jeweilige Experiment erforderliche Vakuumdichtigkeit, so dass eine Vielzahl von Vorrichtungen mit gleichgenormten Gegenflanschen angeschlossen werden können. Insbesondere kann ein äußerer Flansch auf Raumtemperatur und ein innerer Flansch auf kryogene Temperaturen von flüssiger Stickstofftemperatur über flüssige Heliumtemperatur bis hinab in den Millikelvinbereich ausgelegt sein.

Gemäß einer weiteren erfindungsgemäßen Ausgestaltung kann die kryogene Platte an der Tischplatte insbesondere starr befestigt sein. Vorteilhafterweise dienen dazu justierbare Verbindungselemente wie etwa Stellschrauben, damit die Plattenoberfläche gegenüber der Tischoberfläche bezüglich horizontaler und vertikaler Position, horizontaler und vertikaler Winkelausrichtung, gegebenfalls der Ausrichtung der jeweiligen Befestigungsmittel einstellbar ist. Dies vereinfacht die Montage eines optischen Versuchsaufbaus und vermeidet die Notwendigkeit einer aufgrund mechanischer Verschiebungen erforderlichen Rejustage.

Gemäß einer weiteren erfindungsgemäßen Ausgestaltung kann zusätzlich eine Haube mit mindestens einem optischen Fenster, Pumpzuleitungen, vorzugsweise vakuumdichten Durchleitungen für elektrische Kabel oder mechanische Vorrichtungen wie Manipulatoren für die Objekte und/oder auch optische Shutter vorgesehen sein. Insbesondere kann die auf der kryogenen Platte montierte Haube einen Hohlraum der zumindest durch eine Teilfläche der oberen Plattenoberfläche der kryogenen Platte begrenzt ist, allseits umschließen, so dass ein evakuierbarer Raum entsteht.

Die Haube kann insbesondere eine vakuumtaugliche Kammer sein, an deren offener Unterseite entsprechende Gegenflansche zu den Flanschen der kryogenen Platte vorgesehen sind, so dass ein Teilbereich der oberen Plattenoberfläche zusammen mit der Innenfläche der Haube einen abgeschlossenen und evakuierbaren Raum bilden.

Die mehreren optischen Fenster zur Ein- oder Auskopplung von Licht in bzw. aus der Haube, die Pumpzuleitungen und/oder die sonstigen Durchleitungen können an der gesamten Oberfläche der Haube frei angeordnet sein. Beispielsweise können als Rundfenster oder Fensterbänder ausgestaltete optische Fenster in beliebiger Höhe und Winkelanordnung über 360° in der Haube verteilt sein. Durchleitungen für elektrische Leitungen, Manipulatoren oder Messsonden können beispielsweise von schräg oben und zudem umlaufend in der Haube vorgesehen sein. Ferner kann eine Pumpleitung, über die der evakuierbare Raum mit einem vorzugsweise schwingungsarmen und - entkoppelten Pumpstand in fluider Verbindung steht, von oben an die Haube angeschlossen werden. Grundsätzlich kann die Haube so frei nach den Erfordernissen des durchzuführenden Experiments konfiguriert werden.

Gemäß einer weiteren erfindungsgemäßen Ausgestaltung kann zwischen der Kältemaschine unter dem optischen Tisch und der unteren Oberfläche der kryogenen Platte eine flexible Verbindungsstruktur zur thermischen Isolierung vorgesehen sein. Die Verbindungsstruktur kann einen oder, zur besseren thermischen Isolierung gegen die Umgebung, mehrere ineinander liegende und gegeneinander abgedichtete Vakuumbereiche umfassen.

Gemäß einer weiteren erfindungsgemäßen Ausgestaltung kann die Kältemaschine mit der kryogenen Platte über einen mechanisch bei kryogenen (z.B. wenige Kelvin) bis Raumtemperatur flexibles Element thermisch verbunden sein. Dies kann beispielsweise ein Draht oder Geflecht aus einem Material hoher Wärmeleitfähigkeit wie Kupfer sein, um zur effizienten Kühlung der zu untersuchenden Probe einen möglichst hohen Wärmestrom von der kryogenen Platte zur Kältemaschine führen zu können. Erfindungsgemäß ist das flexible Element vibrationsarm oder vibrationsabsorbierend ausgestaltet, beispielweise als Geflecht von Kupferdrähten oder Kupferlitze, so dass eine Einkopplung von Vibrationen der Kältemaschine in die kryogene Platte weitestgehend vermieden wird. Alternativ denkbar ist auch eine thermische Ankopplung von kryogener Platte und Kältemaschine durch ein Gas, Fluid oder kontaktfrei durch Wärmeschilder zur Aufnahme der Wärmestrahlung der kryogenen Platte.

Gemäß einer weiteren erfindungsgemäßen Ausgestaltung kann eine Dämpfungssteuerung vorgesehen sein, die mit der Dämpfungseinrichtung in Wirkverbindung steht und die Dämpfungseinrichtung in Abhängigkeit detektierter Vibrationen ansteuert, so dass die Tischplatte und ihre Tischoberfläche von Vibrationen freigehalten wird.

Die Erfindung und vorteilhafte Weiterbildungen werden in den beigefügten Figuren beispielhaft veranschaulicht. Gleiche und gleichwirkende Merkmale sind nur teilweise mit Bezugszeichen versehen. Die Figuren zeigen:
- Figur 1: eine schematische Schnittansicht eines Ausführungsbeispiels des erfindungsgemäßen optischen Tisches;
- Figur 2: eine schematische Draufsicht auf eine erfindungsgemäße kryogene Platte;
- Figur 3: eine schematische Schnittansicht eines weiteren Ausführungsbeispiels des erfindungsgemäßen optischen Tisches;
- Figur 4: eine perspektivische Ansicht einer auf dem erfindungsgemäßen optischen Tisch montierten Haube;
- Figur 5: eine perspektivische Ansicht einer auf dem erfindungsgemäßen optischen Tisch montierten Haube in semitranspatenter Darstellung;
- Figur 6: eine perspektivische Ansicht auf einen erfindungsgemäßen optischen Tisch ohne montierte Haube und
- Figur 7: eine perspektivische Ansicht auf einen erfindungsgemäßen optischen Tisch mit montierter Haube.

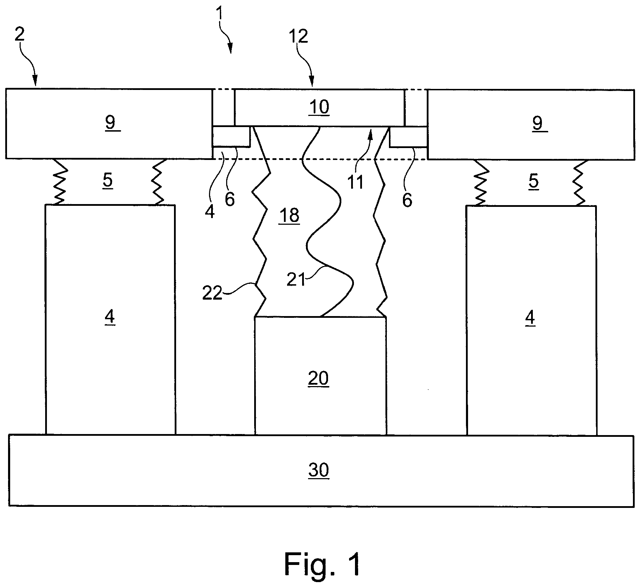

**Figur 1** zeigt eine schematische Schnittansicht eines erfindungsgemäßen optischen Tisches 1. Eine Tischplatte 9 mit einer oben liegenden Tischplattenoberfläche 2 wird von Tischbeinen 4 getragen. Zwischen jedem Tischbein 4 und der Tischplatte 9 ist je eine Dämpfungseinrichtung 5 angeordnet. In einer (oder mehreren) Durchbrechung 3 in der Tischplatte 9 ist (je) eine kryogene Platte 10 durch Verbindungselemente 6 starr befestigt, so dass eine obere Plattenoberfläche 12 mit der Tischoberfläche 2 fluchtet. Die kryogene Platte 10 ist an ihrer unteren Plattenoberfläche 11 über eine mechanisch flexible und Verbindungsstruktur 22 vakuumdicht mit einer Kältemaschine 20 in mechanischer und/oder fluider Verbindung. Die Verbindungsstruktur 22 kann durch einen Pumpstand (nicht dargestellt) der Kältemaschine 20 evakuiert werden. Weiterhin ist die untere Plattenoberfläche 11 über ein flexibles Element 21 aus einem wärmeleitfähigen Material wie Kupfer, das einen zur effizienten Kühlung der kryogenen Platte 10 ausgelegten Wärmestrom tragen kann, in mechanischer und thermischer Verbindung. Dadurch sind die Kältemaschine 20 und die kryogene Platte 10 mechanisch nicht starr verbunden und mithin zumindest orthogonal zur Tischebene gegeneinander beweglich und voneinander vibrationsisoliert bzw. vibrationsgedämmt. Mindestens zwei oder mehr Tischbeinen 4 sind über die Versteifungsstruktur 30 - hier der Fußboden unter dem Tisch - mit der Kältemaschine 20 starr verbunden. Durch diese starre Verbindung wird die vibrationsbelastete Bewegung in Richtung der Normalen der Tischoberfläche 2, die beim Evakuieren der Verbindungsstruktur 22 auf die Kältemaschine 20 wirkt, sowie eventuelle Eigenvibrationen der Kältemaschine 20 im Betrieb in die verbundenen Tischbeine 4 abgeleitet und ihren jeweiligen Dämpfungseinrichtungen 5 gegenüber der Tischplatte 9 und der damit starr verbundenen kryogenen Platte 10 kompensiert.

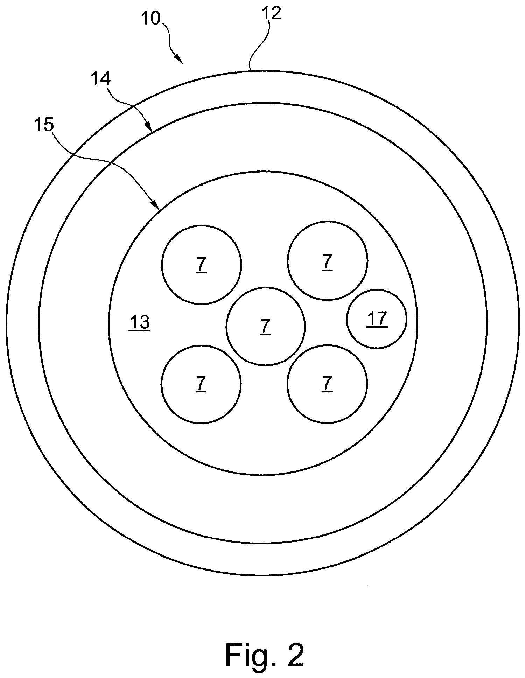

**Figur 2** zeigt eine schematische Draufsicht auf eine obere Plattenoberfläche 12 einer erfindungsgemäßen kreisförmigen kryogenen Platte 10. In der oberen Plattenoberfläche 12 sind ein äußerer Raumtemperaturflansch 14 und ein innerer kryogener Flansch 15 ausgebildet und konzentrisch angeordnet.

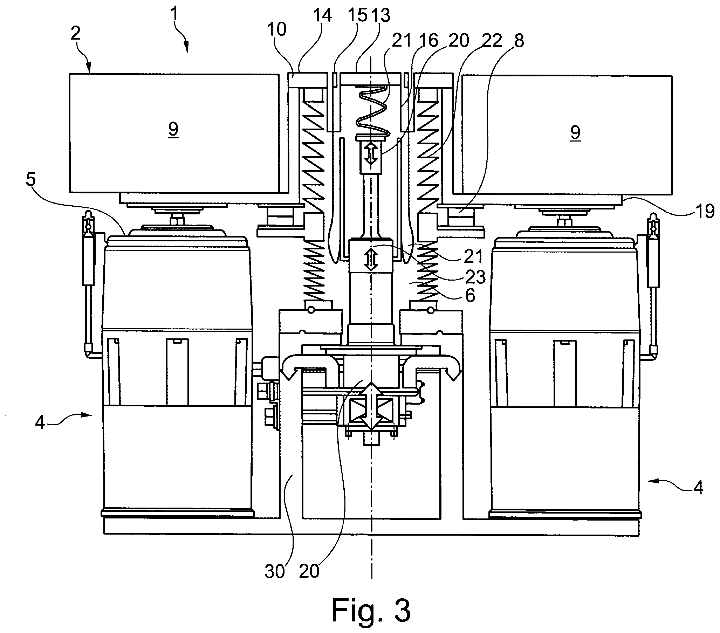

**Figur 3** zeigt eine schematische Schnittansicht einer Fortbildung des optischen Tisches 1 nach Figur 1. Die Versteifungsstruktur 30 ist so ausgestaltet, dass die Tischbeine 4 auf ihr angeordnet stehen und die Kältemaschine 20 in einem als Gehäuse 25 ausgebildeten Hohlraum hängend befestigt ist. Das flexible Element 21 ist über eine erste Kältestufe 23 und eine zweite Kältestufe 24 mit der Kältemaschine 20 mechanisch verbunden. Die erste Kältestufe 23 und die zweite Kältestufe 24 sind ihrerseits durch ein weiteres flexibles Element 21 thermisch verbunden. Die starre Verbindung zwischen kryogener Platte 10 und Tischplatte 9 wird über eine vorzugsweise justierbare Tragevorrichtung 19 hergestellt. Zur zusätzlichen Schwingungsdämpfung ist diese Tragevorrichtung 19 über weitere Dämpfungseinrichtungen 8 mit der flexiblen Verbindungsstruktur 22 verbunden.

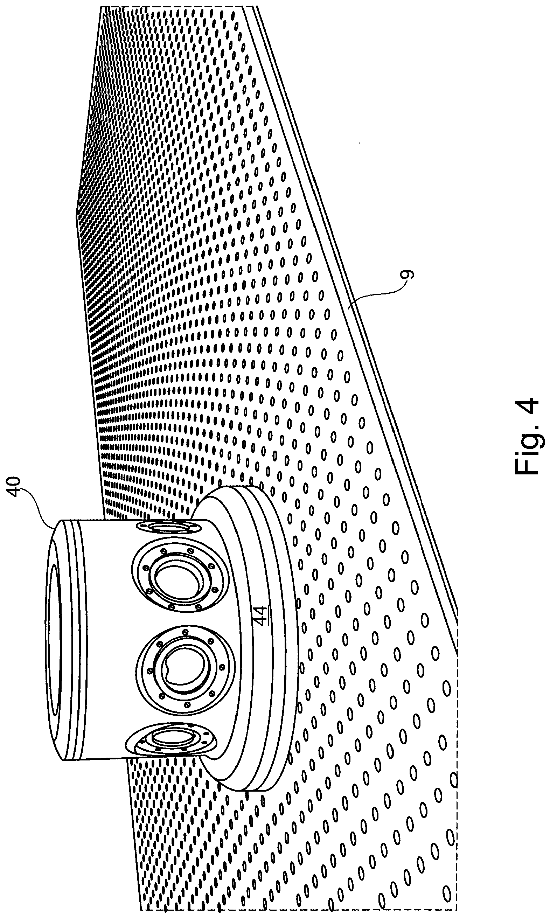

**Figur 4** zeigt eine perspektivische Ansicht einer Haube 40, deren Raumtemperaturgegenflansch 44 mit dem Raumtemperaturflansch 14 der kryogenen Platte 10 formschlüssig und vakuumgedichtet verbunden ist. Selbiges gilt für den hier nicht darstellbaren inneren kryogenen Gegenflansch 45 der Haube 40 und den kryogenen Flansch 6 der kryogenen Platte 10. In bezüglich der Tischoberfläche 2 horizontaler Richtung umlaufend und auf 360° gleichverteilt trägt die Haube 40 nicht dargestellte Aussparungen, in die flanschumrahmte optische Fenster 41 montiert sind. Die Befestigungsmittel 7 zur Aufnahme optischer Elemente sind als kubisches Gitter von Gewindelöchern in der Tischplatte 9 ausgebildet.

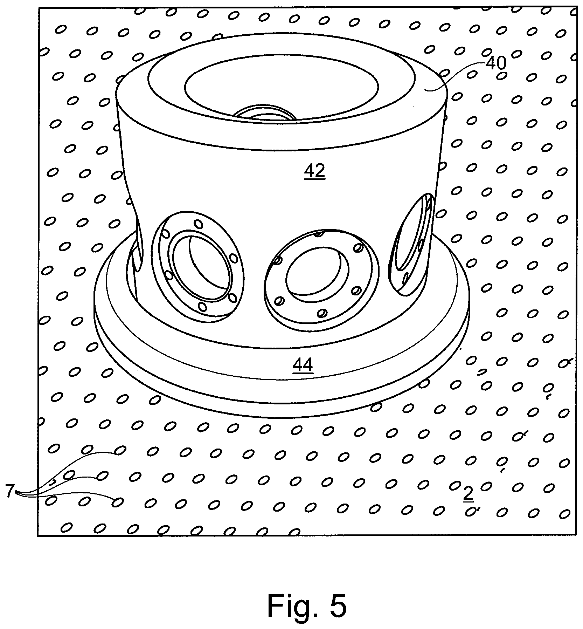

**Figur 5** zeigt die bereits in Figur 4 dargestellte im optischen Tisch 1 montierte Haube 40 in semitranspatenter Darstellung, so dass sichtbar ist, dass die obere Plattenoberfläche 12 der kryogenen Platte 10 mit der Tischoberfläche 2 fluchtet. Der von der kryogenen Platte 10 und der Haube 40 umschlossene Raum 42 ist evakuierbar. Dazu kann einerseits ein externer Pumpstand (nicht dargestellt) beispielsweise durch einen flexiblen Schlauch (nicht dargestellt) an die Haube 40 angeschlossen werden. Anderseits kann auch auf der Teilfläche 13 der kryogenen Platte 10 ein durchgängiges Loch oder ein Ventil (nicht dargestellt) vorgesehen werden, so dass der Raum 42 über einen Pumpstand (nicht dargestellt) der Kältemaschine (20) evakuiert werden kann. Evakuieren bezeichnet im Erfindungssinn die Druckreduktion in einem abgeschlossenen Raum 42 unter Atmosphärendruck (1 bar), z.B. in den Bereich von 10⁻⁴ mbar oder 10⁻⁶ mbar oder sogar 10⁻¹¹ mbar.

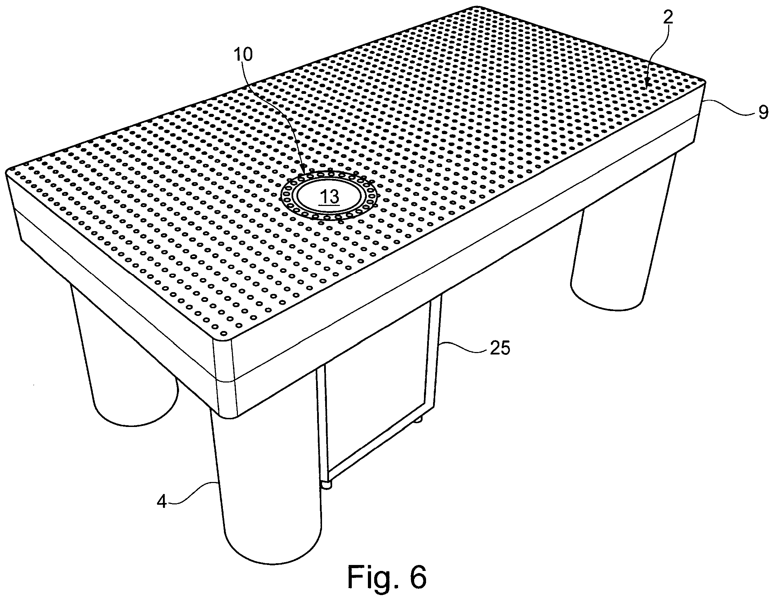

**Figur 6** zeigt eine perspektivische Ansicht auf einen erfindungsgemäßen optischen Tisch 1 ohne montierte Haube 40. Die Kältemaschine 20 wird von einem auf dem Boden (ohne Bezugszeichen) stehenden Gehäuse 25 aufgenommen. Die starre Verbindung der Kältemaschine 20 mit zumindest einem Tischbein 4 unterhalb der jeweiligen Dämpfungseinrichtung 5 ist hier nicht darstellbar.

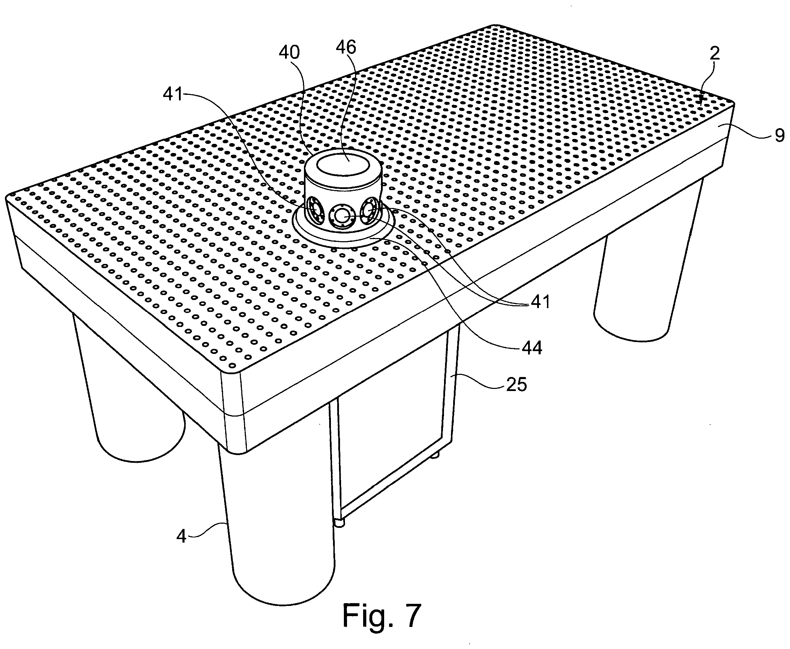

**Figur 7** zeigt eine perspektivische Ansicht auf einen erfindungsgemäßen optischen Tisch 1 aus Figur 6 mit montierter Haube 40. Im oberen Bereich trägt die Haube 40 ein Sichtfenster 46 zur Inaugenscheinnahme ihres Inneren durch einen Experimentator.

Dem Fachmann wird durch die hier offenbarte Erfindung auch, soweit technisch möglich, zur Kombination von Merkmalen, die im Kontext verschiedener erfindungsgemäßer Ausführungsformen beschrieben sind, angeregt.

### Bezugszeichenliste:

- 1: Optischer Tisch
- 2: Tischoberfläche
- 3: Durchbrechung
- 4: Tischbeine
- 5: Dämpfungseinrichtung
- 6: Verbindungselement
- 7: Befestigungsmittel
- 8: Weitere Dämpfungseinrichtungen
- 9: Tischplatte

- 10: Kryogene Platte
- 11: Untere Plattenoberfläche
- 12: Obere Plattenoberfläche
- 13: Teilfläche
- 14: Raumtemperaturflansch
- 15: Kryogener Flansch
- 16: Thermische Isolierung
- 17: Durchlass bzw. regelbares Ventil
- 18: Vakuumbereich
- 19: Tragevorrichtung

- 20: Kältemaschine
- 21: Flexibles Element
- 22: Flexible Verbindungsstruktur
- 23: Erste Kältestufe
- 24: Zweite Kältestufe
- 25: Gehäuse

- 30: Versteifungsstruktur
- 40: Haube
- 41: Fenster
- 42: Hohlraum
- 44: Raumtemperaturgegenflansch
- 45: Kryogener Gegenflansch
- 46: Sichtfenster

## Patentansprüche

1. Optischer Tisch (1) mit einer Tischplatte (9) und mindestens einem Tischbein (4), wobei
• in einer Tischoberfläche (2) der Tischplatte (9) Befestigungsmittel (7) zur Befestigung von Objekten vorgesehen sind,
• das mindestens eine Tischbein (4) mit einer Dämpfungseinrichtung (5) zur Dämpfung von Vibrationen ausgestattet ist,
**wobei**
• eine Kältemaschine (20) zur Kühlung einer kryogenen Platte (10) unter der Tischplatte (9) vorgesehen ist, wobei die kryogene Platte (10) mit der Kältemaschine (20) in thermischem Kontakt steht und durch diese kühlbar ist,
• eine Versteifungsstruktur (30) zwischen der Kältemaschine (20) und mindestens einem Tischbein (4) vorgesehen ist,
o wobei die Versteifungsstruktur (30) unterhalb der Dämpfungseinrichtung (7) mit dem mindestens einem Tischbein starr verbunden ist und
o die Kältemaschine (20) sich auf der Versteifungsstruktur (30) abstützt und mit dieser verbunden ist,
• eine Durchbrechung (3) in der Tischplatte (9) oberhalb der Kältemaschine (20) vorgesehen ist, in der die kryogene Platte (10) angeordnet ist,
• die Dämpfungseinrichtung (5) zwischen dem mindestens einem Tischbein (4) und der Tischplatte (9) angeordnet ist, und
• die Versteifungsstruktur (30) eine Platte oder ein Gerüst mit einer Haltevorrichtung ist, welche die Kältemaschine (20) und das mindestens eine Tischbein (4) unterhalb der Dämpfungseinrichtung (5) starr verbindet.

2. Optischer Tisch (1) nach Anspruch 1, wobei eine obere Plattenoberfläche (12) der kryogenen Platte (10) mit der Tischoberfläche (2) der Tischplatte (9) bündig abschließt.

3. Optischer Tisch (1) nach einem der vorhergehenden Ansprüche, wobei in der oberen Platenoberfläche (12) der kryogenen Platte (10) Befestigungsmittel (7) zur Befestigung von Objekten vorgesehen sind.

4. Optischer Tisch (1) nach einem der vorhergehenden Ansprüche, wobei um die kryogene Platte (10) zumindest an der oberen Plattenoberfläche (12) und/oder an einer unteren Plattenoberfläche (11) je mindestens ein Flansch (15, 16) angeordnet ist.

5. Optischer Tisch (1) nach dem vorhergehenden Anspruch, wobei die kryogene Platte (10) an der Tischplatte (9) befestigt ist.

6. Optischer Tisch (1) nach einem der vorhergehenden Ansprüche, wobei zusätzlich eine Haube (40) mit mindestens einem optischen Fenster (41) vorgesehen ist, die entlang einer umlaufenden Kontur auf der oberen Plattenoberfläche formschlüssig montierbar ist und im montierten Zustand die kryogene Platte (10) umgibt.

7. Optischer Tisch (1) nach Anspruch 6, wobei die auf der kryogenen Platte (10) montierte Haube (40) einen Hohlraum (42), der zumindest durch eine Teilfläche (13) der oberen Plattenoberfläche (12) der kryogenen Platte (10) begrenzt ist, allseits umschließt.

8. Optischer Tisch (1) nach einem der vorhergehenden Ansprüche, wobei zwischen der Kältemaschine (20) unter dem optischen Tisch (1) und der unteren Oberfläche (11) der kryogenen Platte (10) eine flexible Verbindungsstruktur (22) vorgesehen ist, die mindestens einen evakuierbarer Raum (18) umfasst.

9. Optischer Tisch (1) nach einem der vorhergehenden Ansprüche, wobei die Kältemaschine (20) mit der kryogenen Platte (10) über ein mechanisch flexibles Element (21) thermisch verbunden ist.

10. Optischer Tisch (1) nach einem der vorhergehenden Ansprüche, wobei eine Dämpfungssteuerung vorgesehen ist, die mit der Dämpfungseinrichtung (5) in Wirkverbindung steht und die Dämpfungseinrichtung (5) in Abhängigkeit detektierter Vibrationen ansteuert.

## Claims

1. Optical table (1) with a table top (9) and at least one table leg (4), wherein
• securing means (7) for securing objects are provided in a table surface (2) of the table top (9),
• the at least one table leg (4) is equipped with a damping device (5) for damping vibrations,
**wherein**
• a cryocooler (20) for cooling a cryogenic plate (10) is provided underneath the table top (9), wherein the cryogenic plate (10) is in thermal contact with the cryocooler (20) and can be cooled by it,
• a reinforcing structure (30) is provided between the cryocooler (20) and at least one table leg (4),
o wherein the reinforcing structure (30) is rigidly connected to the at least one table leg underneath the damping device (7) and
o the cryocooler (20) is supported on the reinforcing structure (30) and is connected to it,
• a through hole (3) in the table top (9) is provided above the cryocooler (20), in which the cryogenic plate (10) is arranged,
• the damping device (5) is arranged between the at least one table leg (4) and the table top (9), and
• the reinforcing structure (30) is a plate or a frame with a holding device which rigidly connects the cryocooler (20) and the at least one table leg (4) underneath the damping device (5).

2. Optical table (1) according to claim 1, wherein an upper plate surface (12) of the cryogenic plate (10) finishes flush with the table surface (2) of the table top (9).

3. Optical table (1) according to one of the preceding claims, wherein securing means (7) for securing objects are provided in the upper plate surface (12) of the cryogenic plate (10).

4. Optical table (1) according to one of the preceding claims, wherein in each case at least one flange (15, 16) is arranged around the cryogenic plate (10) at least on the upper plate surface (12) and/or on a lower plate surface (11).

5. Optical table (1) according to the preceding claim, wherein the cryogenic plate (10) is secured to the table top (9).

6. Optical table (1) according to one of the preceding claims, wherein a hood (40) with at least one optical window (41) is additionally provided, which can be mounted in a form-fitting manner on the upper plate surface along a circumferential contour and surrounds the cryogenic plate (10) when mounted.

7. Optical table (1) according to claim 6, wherein the hood (40) mounted on the cryogenic plate (10) encloses, on all sides, a cavity (42) which is bordered at least by a partial surface (13) of the upper plate surface (12) of the cryogenic plate (10).

8. Optical table (1) according to one of the preceding claims, wherein a flexible connecting structure (22) which comprises at least one evacuable space (18) is provided between the cryocooler (20) underneath the optical table (1) and the lower surface (11) of the cryogenic plate (10).

9. Optical table (1) according to one of the preceding claims, wherein the cryocooler (20) is thermally connected to the cryogenic plate (10) via a mechanically flexible element (21).

10. Optical table (1) according to one of the preceding claims, wherein a damping control is provided, which is operatively connected to the damping device (5) and actuates the damping device (5) depending on detected vibrations.

## Revendications

1. Table optique (1) avec une plaque de table (9) et au moins un pied de table (4) ;
- des moyens de fixation (7) étant prévus dans une surface de table (2) de la plaque de table (9) pour la fixation d'objets ;
- l'au moins un pied de table (4) étant équipé d'un dispositif d'amortissement (5) pour l'amortissement des vibrations ;
- une machine frigorifique (20) étant prévue pour le refroidissement d'une plaque cryogénique (10) prévue sous la plaque de table (9), la plaque cryogénique (10) pouvant être en contact thermique avec la machine frigorifique (20) et être refroidie par elle ;
- une structure de renforcement (30) étant prévue entre la machine frigorifique (20) et au moins un pied de table (4) ;
- la structure de renforcement (30) située sous le dispositif d'amortissement (7) étant reliée de façon rigide à au moins un pied de table et la machine frigorifique (20) étant en appui sur la structure de renforcement et étant reliée à elle ;
- un passage (3) dans lequel la plaque cryogénique (10) est disposée étant prévu dans la plaque de table (9) au-dessus de la machine frigorifique (20) ;
- le dispositif d'amortissement (5) étant disposé entre l'au moins un pied de table (4) et la plaque de table (9) ; et
- la structure de renforcement (30) étant une plaque ou un cadre équipé d'un dispositif d'arrêt reliant de façon rigide la machine frigorifique (20) et l'au moins un pied de table (4) situé sous le dispositif d'amortissement (5).

2. Table optique (1) selon la revendication 1, une surface de plaque supérieure (12) de la plaque cryogénique (10) se terminant en affleurement par la surface de table (2) de la plaque de table (9).

3. Table optique (1) selon l'une quelconque des revendications précédentes, des moyens de fixation (7) étant prévus dans la surface de plaque supérieure (12) de la plaque cryogénique (10) pour la fixation d'objets.

4. Table optique (1) selon l'une quelconque des revendications précédentes, respectivement au moins un flasque (15, 16) situé au moins au niveau de la surface de plaque supérieure (12) et/ou au niveau d'une surface de plaque inférieure (11) état disposé autour de la plaque cryogénique (10).

5. Table optique (1) selon la revendication précédente, la plaque cryogénique (10) étant fixée à la plaque de table (9).

6. Table optique (1) selon l'une quelconque des revendications précédentes, un capot (40) étant en outre pourvu d'au moins une fenêtre optique (41) pouvant être montée par complémentarité de formes sur la surface de plaque supérieure, le long d'un contour périphérique, et entourant, à l'état monté, la plaque cryogénique (10).

7. Table optique (1) selon la revendication 6, le capot (40) monté sur la plaque cryogénique (10) entourant de tous les côtés un espace creux (42) délimité au moins par une surface partielle (13) de la surface de plaque supérieure (12) de la plaque cryogénique (10).

8. Table optique (1) selon l'une quelconque des revendications précédentes, une structure de liaison (22) flexible étant prévue entre la machine frigorifique (20) placée sous la table optique (1) et la surface inférieure (11) de la plaque cryogénique (10), ladite structure comprenant au moins un espace (18) évacuable.

9. Table optique (1) selon l'une quelconque des revendications précédentes, la machine frigorifique (20) étant reliée thermiquement à la plaque cryogénique (10) via un élément (21) flexible de façon mécanique.

10. Table optique (1) selon l'une quelconque des revendications précédentes, un élément de commande d'amortissement étant prévu qui est en liaison active avec le dispositif d'amortissement (5) et commande le dispositif d'amortissement (5) en fonction des vibrations détectées.
